# EUROPÄISCHE PATENTANMELDUNG

(11) **EP 3 434 958 A1**
(43) Veröffentlichungstag der Anmeldung: **30.01.2019**
(21) Anmeldenummer: 17183535.8
(22) Anmeldetag: 27.07.2017
(51) Int. Cl.: F16N 3/12

(54) **FETTPRESSE**

(71) Anmelder: Zinth, Albert, 89257 Illertissen-Jedesheim (DE)
(72) Erfinder: Zinth, Albert, 89257 Illertissen-Jedesheim (DE)
(74) Vertreter: Wiese, Gerhard

(57) **Zusammenfassung**

Die Erfindung betrifft eine Fettpresse (10) mit einem zylindrischen Gehäuse (12), einem an einem Ende des Gehäuses (12) angeordneten Pressenkopf (14), einem an dem Pressenkopf (14) gelenkig gelagerten Presshebel (16) und einem mit dem Pressenkopf (14) verbundenen Hochdruckschlauch (30), der an einem freien Ende ein Mundstück (36) aufweist. Für ein vor Verschmutzung geschütztes Ablegen der Fettpresse (10) ist erfindungsgemäß vorgesehen, dass das Mundstück (36) von einer am Gehäuse (12) anbringbaren Haltevorrichtung (20) aufnehmbar ist. Die Erfindung betrifft auch eine nachträglich am Gehäuse (12) einer Fettpresse anbringbare Haltevorrichtung (20).

## Beschreibung

Die Erfindung betrifft eine Fettpresse gemäß dem Oberbegriff des Patentanspruchs 1 und eine daran anbringbare Haltevorrichtung nach Anspruch 7.

Eine Fettpresse mit den Merkmalen des Oberbegriffs ist aus DE 29 806 515 U1 bekannt. Dabei handelt es sich um eine Fettpresse mit einer Steckaufnahme für ein an einem Hochdruckschlauch ausgebildetes Mundstück, die am Presshebel angeordnet ist. Eine derartige Anordnung hat sich als wenig vorteilhaft erwiesen, da die Steckaufnahme am Presshebel Platz wegnimmt und ständig mitbewegt werden muss.

Aufgabe der Erfindung ist es, eine Fettpresse mit einer verbesserten Halterung für das Mundstück des Hochdruckschlauchs zu versehen.

Diese Aufgabe wird durch eine Fettpresse mit den Merkmalen des Anspruchs 1 und durch eine auch nachträglich an einer Fettpresse anbringbare Halterung gemäß Anspruch 7 gelöst. Vorteilhafte Ausgestaltungen der Erfindung sind in den darauf bezogenen Unteransprüchen angegeben.

Mit der vorliegenden Erfindung ist es möglich, Fettpressen mit einem einfach anzubringenden und zu reinigenden Tropfschutz und einem gleichzeitigen Schutz vor einer Verschmutzung des Mundstücks auszustatten.

Als Einsatzgebiet der Erfindung seien beispielhaft Fettpressen im gewerblichen und/oder privaten Bereich genannt. Dabei ist es unerheblich, ob diese einen oder zwei Betätigungshebel aufweist oder ob diese manuell, motorisch oder pneumatisch betätigbar ist. Die Haltevorrichtung kann beispielsweise auch als Nachrüstung von bereits im Einsatz befindlichen Fettpressen zum Einsatz kommen.

Die erfindungsgemäße Fettpresse mit einem zylindrischen Gehäuse, einem an einem Ende des Gehäuses angeordneten Pressenkopf, einem an dem Pressenkopf gelenkig gelagerten Presshebel und einem mit dem Pressenkopf verbundenen Hochdruckschlauch, weist an einem freien Ende des Hochdruckschlauchs ein düsenartiges Mundstück auf. Das Mundstück ist von einer am Gehäuse anbringbaren Haltevorrichtung aufnehmbar. Dadurch bleibt der Presshebel frei von Aufnahmevorrichtungen für das Mundstück und ist einfacher betätigbar.

In einer vorteilhaften Ausgestaltungsform der Fettpresse ist die Haltevorrichtung mit einer im Durchmesser verstellbaren Schelle an einem Mantel des Gehäuses befestigbar und weist eine Hülse zur Aufnahme des Mundstücks auf. Vorzugsweise erfolgt die Positionierung der Haltevorrichtung so, dass die Hülse auf der dem Presshebel gegenüberliegenden Seite des Gehäuses angeordnet ist. Es sind jedoch auch davon abweichende Positionierungen in beliebiger radialer und axialer Position bezüglich des Gehäuses denkbar. Der Benutzer ist somit in der Lage, die Haltevorrichtung seinen Anforderungen entsprechend flexibel am Gehäuse zu positionieren. Dabei kann die Länge des Hochdruckschlauchs ebenso berücksichtigt werden wie eine rechts- oder linkshändige Bedienung oder die bevorzugte Ablage- oder Aufbewahrungsposition der Fettpresse.

Von der Erfindung werden auch solche Fettpressen mit umfasst, bei denen die Haltevorrichtung fest am Gehäuse angeordnet ist, beispielsweise eine Haltevorrichtung aus Metall, die an einem Gehäuse aus Metall angeschweißt, angelötet. angeklebt oder angegossen wird oder eine Haltevorrichtung aus Kunststoff, die an das Gehäuse angespritzt oder einstückig mit dem Gehäuse in einer Spritz- oder Gießform hergestellt ist.

Die Hülse weist bevorzugt einen dem Außendurchmesser des Mundstücks entsprechenden Innendurchmesser auf, so dass das Mundstück sicher in der Hülse gehalten wird.

In einer vorteilhaften Weiterbildung weist die Hülse an einem Ende einen Verschluss auf. Dadurch kann beispielsweise ein Materialaustritt aus dem Mundstück vermieden bzw. austretendes Schmierfett aufgefangen und die Arbeitsumgebung somit vor Verschmutzung durch austretendes Restmaterial geschützt werden. Umgekehrt wird auch das Mundstück durch Aufnahme in der Hülse vor einer Verschmutzung, beispielsweise durch Metallspäne bei einer Ablage an einer Maschine oder durch Erde bei einer Ablage am Boden, geschützt.

In einer besonders vorteilhaften Weiterbildung der Erfindung wird der Verschluss von einer abnehmbaren Kappe gebildet. Durch die abnehmbare Kappe ist es dem Nutzer der Fettpresse möglich, die Hülse und/oder die Kappe auch in deren Innerem leicht zu reinigen.

Vorteilhafterweise ist die Haltevorrichtung so ausgebildet, dass die im Durchmesser verstellbare Schelle über das dem Pressenkopf gegenüberlegenden Ende des Gehäuses auf dieses aufgeschoben und anschließend in der gewünschten Position fixiert werden kann. Die Schelle kann ein- oder mehrteilig ausgebildet, mit einem klappbaren Gelenk und einer gegenüberliegenden Schraub- oder Clipsverbindung versehen sein oder auch wie eine Schlauchschelle mit einer Madenschraube und einem Schneckenantrieb ausgebildet sein.

Die im nebengeordneten Anspruch 7 beschriebene Haltevorrichtung kann beispielsweise auch als separates Nachrüst-Produkt aus Kunststoff oder Metall an bereits im Einsatz befindlichen Fettpressen zum Einsatz kommen. Dabei können unterschiedliche Anwender- oder herstellerspezifische Farbstellungen berücksichtigt werden.

Nachfolgend werden Ausführungsbeispiele der Fettpresse und der Haltevorrichtung unter Bezugnahme auf die Zeichnungen näher erläutert. Es zeigen:
- Fig. 1: eine schematische Darstellung einer Fettpresse mit einer Haltevorrichtung,
- Fig. 2A: eine perspektivische Ansicht einer Haltevorrichtung mit geschlossenem Verschluss und
- Fig. 2B: eine perspektivische Ansicht der Haltevorrichtung mit geöffnetem Verschluss.

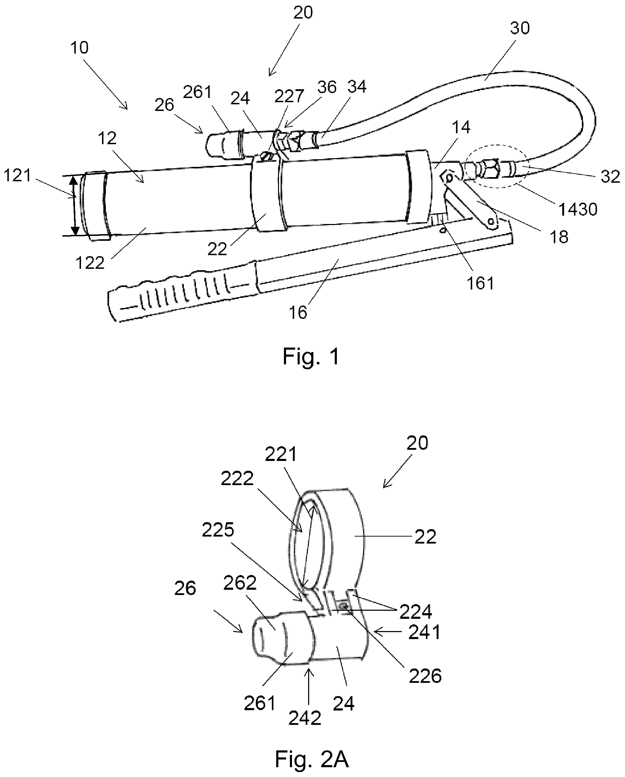

In einer schematischen Darstellung in Fig. 1 ist eine Fettpresse 10 mit einem Gehäuse 12 mit einem Durchmesser 121 gezeigt. Am Gehäuse 12 ist ein Presshebel 16 mittels eines Gelenks 18 gelagert, der über eine Kolbenstange 161 einen in einem Pressenkopf 14 ausgebildeten, nicht dargestellten Pumpenkolben betätigt. Das Gelenk 18 ist an einem vorderen Ende des Pressenkopfs 14 ausgebildet und geht in ein Verbindungselement 1430 über, welches einen Hochdruckschlauch 30 mit dem am vorderen Ende des Gehäuses 12 ausgebildeten Pressenkopf 14 verbindet. Der Hochdruckschlauch 30 weist ein erstes Schlauchende 32 auf, welches vom Verbindungselement 1430 aufgenommen wird und ein zweites Schlauchende 34, welches in ein Mundstück 36 des Hochdruckschlauchs 30 übergeht.

Um einen Mantel 122 des Gehäuses 12 ist eine Haltevorrichtung 20 angeordnet. Die Haltevorrichtung 20 wird aus einer Schelle 22, einer Hülse 24 und einem Verschluss 26 gebildet. Die Haltevorrichtung 20 ist im gezeigten Ausführungsbeispiel am Mantel 122 des Gehäuses 12 so angeordnet, dass die Hülse 24 an der dem Presshebel 16 gegenüberliegenden Seite des Gehäuses 12 angeordnet ist. Die verschiebesichere Befestigung erfolgt mittels einer Schraube 227. So wird der Nutzer beim Bedienen des Presshebels 16 von der Haltevorrichtung 20 nicht behindert. Die Haltevorrichtung kann jedoch auch davon abweichend in beliebiger radialer und axialer Position bezüglich des Gehäuses 12 angebracht werden.

Die Haltevorrichtung 20 dient zur Aufnahme des Mundstücks 36. Um einen Materialaustritt aus dem Mundstück 36 und eine Verschmutzung des Mundstücks 36 beim Ablegen der Fettpresse 10 zu verhindern, weist der Verschluss 26 eine Kappe 261 auf. Die Kappe 261 kann zum Verschließen der Hülse 24 auf diese aufgeschoben und zum Öffnen wieder von der Hülse 24 abgezogen werden.

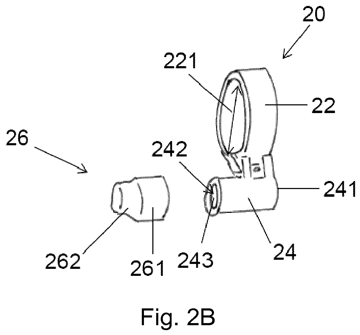

Die Figuren 2A und 2B zeigen die Haltevorrichtung 20. An dieser ist die Schelle 22 über ein erstes Steg-Paar 224 und ein zweites Steg-Paar 225 mit der Hülse 24 verbunden, wobei jeweils ein Steg-Paar 224, 225 auf einer Seite eines Spalts 223 der Schelle 22 angeordnet ist. Durch den Spalt 223 ist eine Öffnung 222 der Schelle 22 auf einen Innendurchmesser 221 aufweitbar. Dadurch ist dieser etwas größer als der Durchmesser 121 des Gehäuses 12, so dass die Haltevorrichtung 20 bevorzugt vom unteren Ende des Gehäuses 12 auf den Mantel 122 aufschiebbar ist. Dabei zeigt ein erstes Ende 241 der Haltevorrichtung 20 in Richtung des Pressenkopfs 14.

Zwischen jedem Steg-Paar 224, 225 ist ein Bohrung 226 vorgesehen. Durch die Bohrung 226 ist eine Schraube 227 führbar, mittels der der Spalt 223 der Schelle 22 zusammengedrückt wird und der Innendurchmesser 221 dem Durchmesser 121 des Gehäuses 12 anpassbar ist. Somit erfolgt eine kraftschlüssige Verbindung zwischen der Haltevorrichtung 20 und dem Gehäuse 12 der Fettpresse 10. Die Haltevorrichtung 20 kann in Längsrichtung an beliebiger Stelle des Gehäuses 12 angeordnet und dadurch auch an unterschiedlich lange Hochdruckschläuche 30 angepasst werden.

An einem zweiten Ende 242 der Hülse 24 ist an einer Öffnung 243 der Verschluss 26 anbringbar. Dieser wird durch eine Kappe 261 mit einer Griffmulde 262 gebildet. Der Verschluss 26 kann von der Hülse 24 abgezogen und wieder aufgesteckt werden. Dies kann beispielsweise beim Reinigen der Hülse 24 oder des Mundstücks 36 von Vorteil sein. In der Fig. 2B ist die Haltevorrichtung 20 mit einem geöffneten Verschluss 26 dargestellt.

Die Haltevorrichtung 20 kann als Ganzes oder die Schelle 22 und/oder die Hülse 24 und/oder die Kappe 261 als Kunststoffspritzteile ausgebildet sein. Alternativ dazu können auch einzelne Teile der Haltevorrichtung 20 oder die gesamte Haltevorrichtung 20 auch aus Metall bestehen.

Ebenso kann das Gehäuse 12 der Fettpresse 10 aus einem beliebigen Material, insbesondere aus Metall oder Kunststoff bestehen.

### Bezugszeichenliste

- 10: Fettpresse
- 12: Gehäuse
- 121: Durchmesser (von 12)
- 122: Mantel (von 12)
- 14: Pressenkopf
- 1430: Verbindungselement (zwischen 14 und 30)
- 16: Presshebel
- 161: Kolbenstange
- 18: Gelenk
- 20: Haltevorrichtung
- 22: Schelle
- 221: Innendurchmesser
- 222: Öffnung (für 30)
- 223: Spalt
- 224: erstes Steg-Paar
- 225: zweites Steg-Paar
- 226: Bohrung
- 227: Schraube
- 24: Hülse
- 241: erstes Ende
- 242: zweites Ende
- 243: Öffnung
- 26: Verschluss
- 261: Kappe
- 262: Griffmulde
- 30: Hochdruckschlauch
- 32: erstes Schlauchende (an 14)
- 34: zweites Schlauchende (an 20)
- 36: Mundstück (von 30)

## Patentansprüche

1. Fettpresse (10) mit einem zylindrischen Gehäuse (12) , einem an einem Ende des Gehäuses (12) angeordneten Pressenkopf (14), einem an dem Pressenkopf (14) gelenkig gelagerten Presshebel (16) und einem mit dem Pressenkopf (14) verbundenen Hochdruckschlauch (30), der an einem freien Ende ein Mundstück (36) aufweist, **dadurch gekennzeichnet, dass** das Mundstück (36) von einer am Gehäuse (12) anbringbaren Haltevorrichtung (20) aufnehmbar ist.

2. Fettpresse (10) nach Anspruch 1, **dadurch gekennzeichnet, dass** die Haltevorrichtung (20) mit einer im Durchmesser verstellbaren Schelle (22) an einem Mantel (122) des Gehäuses (12) befestigbar ist.

3. Fettpresse (10) nach Anspruch 1 oder 2, **dadurch gekennzeichnet, dass** die Haltevorrichtung (20) eine Hülse (24) zur Aufnahme des Mundstücks (36) aufweist.

4. Fettpresse nach Anspruch 3, **dadurch gekennzeichnet, dass** die Hülse (24) einen dem Außendurchmesser des Mundstücks (36) entsprechenden Innendurchmesser aufweist.

5. Fettpresse (10) nach Anspruch 4, **dadurch gekennzeichnet, dass** die Hülse (24) an einem Ende (241) einen Verschluss (26) aufweist.

6. Fettpresse (10) nach Anspruch 5, **dadurch gekennzeichnet, dass** der Verschluss (26) von einer abnehmbaren Kappe (261) gebildet wird.

7. Haltevorrichtung (20) zur Anbringung an einem Gehäuse (12) einer Fettpresse (10), **gekennzeichnet durch** eine im Durchmesser verstellbare, zur Anbringung an einem Mantel (122) des Gehäuses (12) geeignete Schelle (22) und eine an der Schelle (22) befestigte Hülse (24), deren innerer Durchmesser zur Aufnahme eines Mundstücks (36) eines Hochdruckschlauches (30) geeignet ist.

8. Haltevorrichtung (20) nach Anspruch 7, **gekennzeichnet durch** eine abnehmbare Kappe (261), die zum Verschließen eines Endes (241) der Hülse (24) geeignet ist.

9. Haltevorrichtung (20) nach Anspruch 7 oder 8, **dadurch gekennzeichnet, dass** die Schelle (22) und/oder die Hülse (24) und/oder die Kappe (261) als Kunststoffspritzteil ausgebildet sind.

10. Haltevorrichtung (20) nach Anspruch 7 oder 8, **dadurch gekennzeichnet, dass** die Schelle (22) und/oder die Hülse (24) und/oder die Kappe (261) als Metallteil ausgebildet sind.

## Geänderte Patentansprüche

### Geänderte Patentansprüche gemäss Regel 137(2) EPÜ.

1. Fettpresse (10) mit einem zylindrischen Gehäuse (12), einem an einem Ende des Gehäuses (12) angeordneten Pressenkopf (14), einem an dem Pressenkopf (14) gelenkig gelagerten Presshebel (16) und einem mit dem Pressenkopf (14) verbundenen Hochdruckschlauch (30), der an einem freien Ende ein Mundstück (36) aufweist, das von einer am Gehäuse (12) anbringbaren Haltevorrichtung (20) aufnehmbar ist, **dadurch gekennzeichnet, dass** die Haltevorrichtung (20) mit einer im Durchmesser verstellbaren Schelle (22) an einem Mantel (122) des Gehäuses (12) befestigbar ist.

2. Fettpresse (10) nach Anspruch 1, **dadurch gekennzeichnet, dass** die Haltevorrichtung (20) eine Hülse (24) zur Aufnahme des Mundstücks (36) aufweist.

3. Fettpresse nach Anspruch 2, **dadurch gekennzeichnet, dass** die Hülse (24) einen dem Außendurchmesser des Mundstücks (36) entsprechenden Innendurchmesser aufweist.

4. Fettpresse (10) nach Anspruch 3, **dadurch gekennzeichnet, dass** die Hülse (24) an einem Ende (241) einen Verschluss (26) aufweist.

5. Fettpresse (10) nach Anspruch 4, **dadurch gekennzeichnet, dass** der Verschluss (26) von einer abnehmbaren Kappe (261) gebildet wird.

6. Haltevorrichtung (20) zur Anbringung an einem Gehäuse (12) einer Fettpresse (10), **gekennzeichnet durch** eine im Durchmesser verstellbare, zur Anbringung an einem Mantel (122) des Gehäuses (12) geeignete Schelle (22) und eine an der Schelle (22) befestigte Hülse (24), deren innerer Durchmesser zur Aufnahme eines Mundstücks (36) eines Hochdruckschlauches (30) geeignet ist.

7. Haltevorrichtung (20) nach Anspruch 6, **gekennzeichnet durch** eine abnehmbare Kappe (261), die zum Verschließen eines Endes (241) der Hülse (24) geeignet ist.

8. Haltevorrichtung (20) nach Anspruch 6 oder 7, **dadurch gekennzeichnet, dass** die Schelle (22) und/oder die Hülse (24) und/oder die Kappe (261) als Kunststoffspritzteil ausgebildet sind.

9. Haltevorrichtung (20) nach Anspruch 6 oder 7, **dadurch gekennzeichnet, dass** die Schelle (22) und/oder die Hülse (24) und/oder die Kappe (261) als Metallteil ausgebildet sind.
